# DEMANDE DE BREVET EUROPEEN

(11) **EP 2 469 378 A2**
(43) Date de publication de la demande: **27.06.2012**
(21) Numéro de dépôt: 11194729.7
(22) Date de dépôt: 21.12.2011
(51) Int. Cl.: G06F 3/033, G06K 9/22

(54) **Système de saisie d'éléments graphiques**

(30) Priorité: 23.12.2010 FR 1061181
(71) Demandeur: Movea, 38000 Grenoble (FR)
(72) Inventeur: Flament, Bruno, 38134 Saint Julien de Ratz (FR); Caritu, Yanis, 38134 Saint Joseph la Rivière (FR)
(74) Mandataire: Brunelli, Gérald

(57) **Abrégé**

Système de saisie d'éléments graphiques comprenant :
- un dispositif périphérique (DP) sensiblement de forme de stylo ;
- des moyens de numérisation (NUM) des éléments graphiques réalisés par une première extrémité (EXT1) du dispositif périphérique (DP) ; et
- des moyens d'affichage (AFF) adaptés pour afficher lesdits éléments graphiques réalisés ;
- des moyens de mesure (MES) de signaux représentatifs du mouvement effectué par ledit dispositif périphérique (DP), comprenant un gyromètre (G) à au moins deux axes de mesure fournissant des vitesses angulaires selon lesdits axes, liés fixement audit dispositif périphérique (DP) ;
- des moyens de positionnement (POS), sur les moyens d'affichage (AFF), d'un élément de pointage (PT), à partir desdites vitesses angulaires, et
- des moyens d'activation/désactivation (ACT) desdits moyens de positionnement (POS).

## Description

L'invention porte sur un système de saisie d'éléments graphiques, comprenant un dispositif périphérique sensiblement de forme de stylo.

De manière générale, il existe de nombreux systèmes de saisie électronique d'éléments graphiques comprenant un dispositif sensiblement de forme de stylo, tels des stylos numériques ou des ensembles stylet / support dédié (ou instrumenté pour localiser la pointe du stylet), par exemple un ensemble stylet / dispositif à écran tactile ou un ensemble stylet / dispositif à tablette graphique (sans écran).

Les ensembles stylet / support dédié nécessitent une utilisation sur ledit support, ce qui est contraignant, de coût élevé, et d'utilisation limitée spatialement.

Il est également connu des stylos numériques, tel que décrit, par exemple, dans le brevet US 5902968, qui divulgue un stylo numérique muni d'un accéléromètre triaxial et d'un gyromètre triaxial, et des moyens de filtrage des mesures délivrées par l'accéléromètre et le gyromètre. Ces données filtrées sont ensuite converties par changement de repère.

Le document US 2006/0088215 A1 divulgue un système de reconnaissance d'écriture comprenant des moyens sensibles aux signaux analogiques d'entrée représentatifs du mouvement d'un dispositif d'écriture destiné à être tenu dans une main, et des moyens d'échantillonnage pour délivrer des signaux représentatifs de l'accélération du dispositif d'écriture selon au moins deux axes, à une cadence d'échantillonnage déterminée de capture. Le système décrit comprend, en outre, des moyens de filtrage pour filtrer ces signaux échantillonnés et un classificateur pour la comparaison avec un modèle représentatif des caractères formés.

De tels système permettent uniquement de reconnaître des caractères graphiques en série, mais ne peuvent pas remplacer un clavier et une souris.

En effet un stylo électronique connu ne permet pas à l'utilisateur d'utiliser ce même stylo comme outil de gestion du pointeur à l'écran, même lorsqu'il permet un positionnement absolu de la pointe du stylo. Par exemple, les stylos optiques actuels réalisent des fonctions de numérisation de l'écriture et des dessins, i.e. d'éléments graphiques, par une technologie optique de positionnement de la trace de la pointe du stylo sur une surface instrumentée, mais ces stylos optiques ne peuvent pas être utilisés pour la gestion du pointeur en l'air, par exemple pour faire une présentation. C'est l'objet de l'invention de proposer une telle fonction, qui, en association avec le stylo électronique permettant de numériser un geste représentatif d'un élément graphique tel un ou plusieurs caractères ou un dessin, offre un avantage à son utilisateur.

En outre, un stylo électronique se basant sur une estimation de trajectoire relative permet de disposer les tracés ou les caractères estimés ou calculés à partir de la trajectoire les uns à la suite des autres, séquentiellement et sans accès direct et simple, ni positionnement des uns par rapport aux autres.

Si les systèmes sans équipement du repère fixe peuvent faire une mise en correspondance, ou "mapping" en langue anglo-saxonne, entre la position de la pointe du stylo numérique sur le support et l'estimation de cette position dans la feuille virtuelle, les systèmes avec moyens embarqués sur le stylo numérique ne fonctionnent qu'en relatif et sont sujet à une dérive en position.

Un but de l'invention est de pallier ces différents problèmes, et notamment de remplacer un ensemble composé d'un clavier et d'une souris.

Il est proposé, selon un aspect de l'invention, un système de saisie d'éléments graphiques comprenant :
- un dispositif périphérique sensiblement de forme de stylo ;
- des moyens de numérisation des éléments graphiques réalisés par une première extrémité du dispositif périphérique ; et
- des moyens d'affichage adaptés pour afficher lesdits éléments graphiques réalisés ;
- des moyens de mesure de signaux représentatifs du mouvement effectué par ledit dispositif périphérique, comprenant un gyromètre à au moins deux axes de mesure fournissant des vitesses angulaires selon lesdits axes, liés fixement audit dispositif périphérique ; et
- des moyens de positionnement, sur les moyens d'affichage, d'un élément de pointage, à partir desdites vitesses angulaires, et
- des moyens d'activation/désactivation desdits moyens de positionnement.

Un tel système permet de positionner un moyen de pointage sur les moyens d'affichage, et de commuter entre le pointage et le graphisme (tracé ou reconnaissance de caractères) ainsi le dispositif périphérique sensiblement de forme de stylo peut remplacer un clavier et une souris.

Il est ainsi possible pour l'utilisateur, en temps réel, d'écrire un document contenant des éléments graphiques, tels de caractères, avec un pointage sur les moyens d'affichage, tel un écran, pour modifier ou mettre en forme le document, et se repositionner sur l'écran à tout instant durant la conception du document.

L'invention propose donc l'adjonction pertinente et nouvelle d'un dispositif de pointage (par exemple à gyromètre ou à mode souris optique) qui permet avec de faibles mouvements du stylo numérique de se placer où on le souhaite. Cela nécessite d'avoir un retour ou une rétroaction du système, comme l'affichage d'un curseur à l'écran, ce qui permet à l'utilisateur de guider en retour son geste de positionnement, comme un guidage d'un curseur sur un écran.

L'invention permet un positionnement absolu du pointage, i.e. du curseur à l'écran, par exemple, pour que l'utilisateur puisse désigner l'endroit où il souhaite écrire ou agir, comme effacer ou mettre en forme un ensemble de caractères particuliers. La présente invention apporte cet avantage par rapport aux systèmes existants qui ont une limitation ne permettant pas de déterminer une position absolue du pointeur.

Les capteurs nécessaires à la fonction de pointage font partie d'un ensemble de capteur, qui permet de réaliser également une fonction de numérisation de l'écriture, par estimation de la trace de la pointe du stylo, et/ou par mise en correspondance des signaux issus des gestes d'écriture avec une base de données pré-apprise ou prédéterminée.

De manière large, le système peut être également envisagé avec un moyen d'actuation, tel un bras robotisé tenant un pistolet à peinture et ayant pour rôle de reproduire un geste de formation d'un élément graphique (un peu comme sur un écran). Contrôler la position du curseur avec le pointage (donc en relatif mais supervisé par le regard de la personne) devient : contrôler le positionnement du bras robotisé avant qu'il ne retrace un élément graphique. Ainsi, le positionnement d'un élément de pointage peut être vu, soit comme le positionnement de l'extrémité du bras robotisé, soit le positionnement d'un élément de pointage (curseur) sur un écran d'affichage.

En outre, pour une interaction nécessaire comme le pointage sur un écran, les degrés de liberté du geste sont au minimum de deux. Le composant le moins coûteux pour réaliser cette fonction efficacement est le gyromètre à deux axes de mesures (vitesses angulaires d'inclinaison et d'azimut directement converties en déplacement dx (abscisses), dy (ordonnées) à l'écran). Simultanément, ces moyens de mesures sont suffisants pour caractériser des caractères, notamment ceux comprenant une variation plus importante en orientation qu'en translation. En résumé, ce premier mode de réalisation permet au stylo de fournir la fonction équivalente à un ensemble clavier-souris à coût réduit (peu de capteurs).

Dans un mode de réalisation, lesdits moyens de numérisation des éléments graphiques comprennent :
- au moins une base de données représentatives de caractères effectués par ladite première extrémité ; et
- des moyens de mise en correspondance desdits signaux mesurés avec lesdites données représentatives de caractères de ladite base de données.

Ainsi, il est possible de faire du pointage et repositionnement sur un écran pour réaliser un document écrit sans l'aide d'un clavier.

Dans un mode de réalisation, le système comprend, en outre, des moyens d'apprentissage et/ou d'enregistrement de la base de données, pour créer au moins une partie de ladite base de données.

Ainsi la base de données n'est pas forcément une base de données prédéfinie, mais peut être, au moins en partie apprise ou constituée à la volée, et ainsi dépendante et adaptée au moins en partie à l'utilisateur, ce qui limite le taux d'erreur de reconnaissance de caractères, et permet d'étendre le "vocabulaire gestuel".

Lorsqu'un caractère est formé par le dispositif, le mouvement pour le réaliser comporte deux types d'information :
- la trajectoire en position du dispositif qui comprend trois degrés de liberté (trois coordonnées cartésiennes dans un repère à trois dimensions), et
- la trajectoire en orientation du dispositif qui comprend également trois degrés de liberté (trois angles d'orientation, par exemple, l'angle autour de l'axe longitudinal du stylo, et autour de ses deux axes transversaux).

Ces six degrés de liberté ont une importance relative qui dépend du caractère. Les gyromètres, les accéléromètres, les magnétomètres, les capteurs optiques sont adaptés pour caractériser (de manière embarquée) plus particulièrement une orientation ou ses dérivées dans le temps. Seuls, les accéléromètres et les capteurs optiques sont capables, en outre, de rendre compte des dérivées temporelles de la translation, et donc, par traitement adapté, de la translation elle-même.

Dans un mode de réalisation, lesdits moyens de mesure comprennent un accéléromètre à au moins deux axes de mesure.

Ainsi, contrairement au mode de réalisation précédent, dans lequel le jeu de caractères reconnaissables pourrait être limité car les gyromètres seuls ne captent pas la translation du dispositif, l'ajout d'un accéléromètre à au moins deux axes de mesure permet d'inclure dans la base de données des caractères formés avec une composante en translation qui serait discriminante, soit pour caractériser des caractères difficile à discriminer avec la seule orientation, soit pour rendre plus robuste la reconnaissance qui pourra s'appuyer sur des degrés de liberté appartenant aux deux types de trajectoires caractéristiques (orientation et translation).

Selon un mode de réalisation, ledit accéléromètre est disposé à proximité de ladite première extrémité.

Disposer l'accéléromètre à proximité de ladite première extrémité permet d'être proche du point traceur du caractère. S'éloigner de la première extrémité ou pointe, c'est s'éloigner de la trace et c'est être perturbé potentiellement par d'autres accélérations que celles directement liées à la trace. Des moyens correctifs liés aux lois physique de composition des mouvements peuvent être mis en place s'il est impossible de placer l'accéléromètre à proximité de la première l'extrémité.

Selon un mode de réalisation, lesdits moyens de mesure comprennent des moyens de correction adaptés pour remplacer les mesures de l'accéléromètre par des mesures corrigées par association par loi de composition du mouvement des mesures dudit accéléromètre aux mesures dudit gyromètre pour tenir compte de l'éloignement dudit accéléromètre de ladite première extrémité.

Ainsi, lorsque l'accéléromètre ne peut pas être positionné aussi près que souhaité de la première extrémité, on corrige ses mesures de manière à simuler une implantation de l'accéléromètre à proximité de la première extrémité.

Dans un mode de réalisation, lesdits moyens de mesure comprennent un magnétomètre à au moins deux axes de mesure.

La présence d'un tel magnétomètre permet de recaler la position angulaire du dispositif périphérique sensiblement de forme de stylo en azimut (horizontal) de manière absolue et permet d'apporter une robustesse plus importante sur la reconnaissance de gestes, étant donné sa capacité à représenter des orientations.

Selon un mode de réalisation, le système comprend, en outre, des moyens de détermination d'un instant de début et d'un instant de fin de mouvement représentatif d'au moins un caractère effectué par ladite première extrémité.

Ces moyens de détermination peuvent, par exemple, comprendre un capteur de contact, un capteur de force, ou un capteur de proximité, monté à ladite première extrémité, ou même, un actionneur sur le corps du périphérique qui, quoique moins pratique que les précédents moyens, permettrait à l'utilisateur de marquer lui-même les dates de début et de fin de ses tracés.

Ainsi il est possible d'effectuer une reconnaissance caractère par caractère, syllabe par syllabe ou mot par mot, si on détermine un instant de début et de fin de mouvement représentatif d'au moins un caractère effectué par ladite première extrémité. Par rapport à une reconnaissance en continue de caractères, l'avantage est de découper le signal informationnel du geste par tranche et rend plus robuste la reconnaissance car la fenêtre découpée contient à coup sûr le ou les caractères finis et entiers.

Dans un mode de réalisation, lesdits moyens de mesure comprennent un capteur de force à au moins deux axes de mesure, monté à ladite première extrémité.

L'utilisation d'un capteur de force à au moins deux axes de mesure permet de tenir compte de la dynamique d'appui du stylo durant le tracé des caractères et les forces de frottements en jeu entre ladite première extrémité et un support, ce qui représente une information additionnelle par rapport aux mouvements du dispositif périphérique sensiblement de forme de stylo. La reconnaissance en est plus robuste.

Par exemple, lesdits moyens de numérisation sont adaptés pour tenir compte d'une information représentative d'un aspect à trois dimensions, et lesdits moyens d'affichage sont adaptés pour effectuer un affichage d'aspect à trois dimensions.

Ainsi, on peut utiliser l'invention dans un contexte d'affichage avec un aspect à trois dimensions.

Selon un mode de réalisation, ledit capteur de force est adapté pour déterminer un instant de début et d'un instant de fin de mouvement représentatif d'au moins un caractère effectué par ladite première extrémité.

Dans un mode de réalisation, lesdits moyens de mise en correspondance desdits signaux mesurés avec lesdites données représentatives de caractères écrits de la base de données sont adaptés pour utiliser un modèle de Markov caché, une déformation temporelle linéaire, une déformation temporelle dynamique, ou un réseau de neurones.

Ces différentes manières de réaliser les moyens de mise en correspondance desdits signaux mesurés avec lesdites données représentatives de caractères de la base de données, sont connues, éprouvées, fiables, et de coût réduit de réalisation.

Selon un autre mode de réalisation, lesdits moyens de numérisation des éléments graphiques comprennent :
- des moyens de représentation en deux dimensions desdits éléments graphiques ; et
- des moyens de reconnaissance de caractères à partir de ladite représentation en deux dimensions.

Ainsi, le système peut fonctionner par reconstruction de tracé.

Par exemple, lesdits moyens de reconnaissance de caractères comprennent des moyens de reconnaissance optique de caractères.

Il est possible d'utiliser des principes connus d'OCR pour "optical character recognition" en langue anglaise.

L'invention sera mieux comprise à l'étude de quelques modes de réalisation décrits à titre d'exemples nullement limitatifs et illustrés par les dessins annexés sur lesquels :
- la figure 1 illustre un système de reconnaissance de caractères graphiques selon un aspect de l'invention ; et
- la figure 2 illustre un mode de réalisation d'un système de la figure 1.

Dans l'ensemble de figures, les éléments ayants les mêmes références sont similaires.

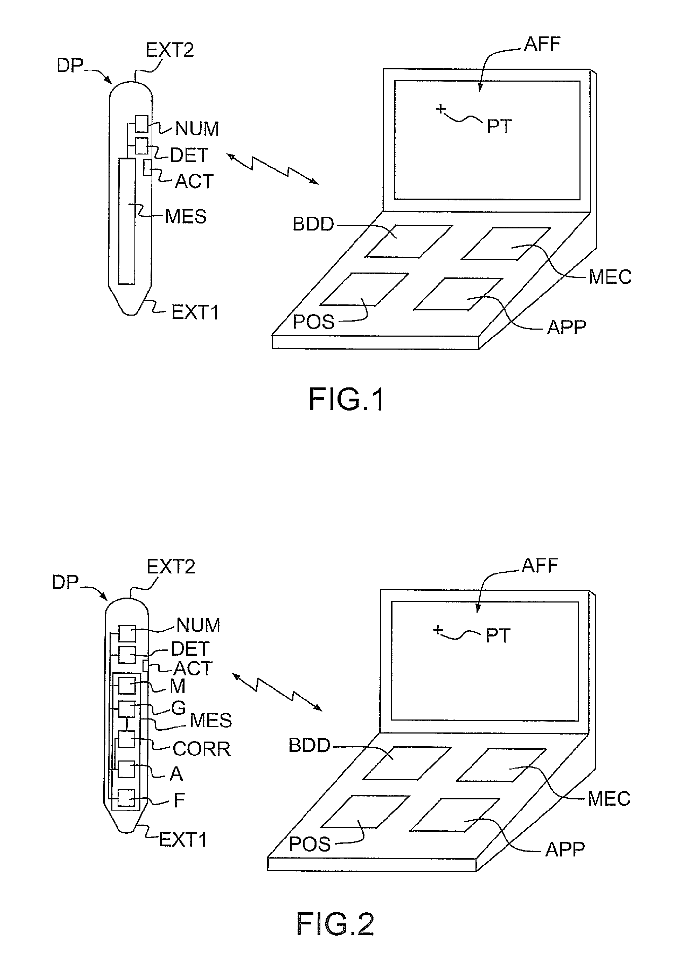

Sur la figure 1 est représenté un système de reconnaissance de caractères graphiques comprenant un dispositif périphérique DP sensiblement de forme de stylo muni de moyens de mesure MES de signaux représentatifs du mouvement effectué par le dispositif périphérique DP sensiblement de forme de stylo. Le mouvement peut être effectué en l'air ou sur un support.

Le système de reconnaissance de caractères graphiques comprend également une base de données BDD représentatives de caractères effectués par une première extrémité EXT1 du dispositif périphérique DP, correspondant à la pointe du stylo, ainsi qu'un module de mise en correspondance MEC des signaux mesurés avec les données représentatives de caractères mémorisées dans la base de données BDD. Le dispositif périphérique DP comprend également un module de numérisation NUM des éléments graphiques réalisés par la première extrémité EXT1 du dispositif périphérique DP.

Il est notamment connu trois catégories principales d'exemples connus :
- un stylet permettant de dessiner des éléments graphiques sur un support de type tablette ou dalle électroniquement équipées pour détecter la position de l'extrémité du stylet représentant la pointe, et obtenir un signal représentatif des coordonnées abscisses x(t) et ordonnées y(t) dans le plan du support. La tablette peut être une tablette à codage par détection inductive d'une bobine au bout du stylet. La dalle peut également être équipée d'un système de détection capacitive. Des systèmes avec rayons optiques rasant ont également été mis au point.
- des systèmes rendant solidaire le support du tracé d'un dispositif de sources émettrices permettant d'opérer une triangulation avec la pointe du stylo. (sources ultrasonores, source infra-rouge, sources électromagnétiques).
- des systèmes ne faisant appel à aucune instrumentation en dehors de celle du stylo : dispositif optique au bout du stylo pour mesurer le flux optique de la texture défilante lors du tracé (mesure de vitesse Vx,Vy de déplacement de la mine sur le support selon deux axes du support), mesure de la force de frottement de la mine colinéaire à la vitesse, mesures inertielles embarquées (via accéléromètres, magnétomètres, et gyromètres).

Ces éléments peuvent, par exemple, être embarqués dans le dispositif périphérique DP, ou sur un terminal mobile associé tel un ordinateur portable.

Le système de reconnaissance de caractères graphiques comprend, en outre, un écran d'affichage AFF adapté pour afficher les caractères graphiques reconnus, et un module de positionnement POS, sur l'écran d'affichage AFF, d'un élément de pointage PT, tel un curseur, à partir du déplacement de la première extrémité EXT1 du dispositif périphérique DP (sur ladite surface).

Le module de positionnement POS est réalisé à l'aide d'un gyromètre G à au moins deux axes de mesure, ce qui permet de réaliser un positionnement du curseur avec un pointage en l'air (sans surface de contact) et sensible aux angles, placé sur la première extrémité EXT1 du dispositif périphérique DP, et sensible aux vitesses en translation. Ce pointage, qui exploite une mesure gyrométrique, peut s'effectuer en pointant directement vers la position désirée ou en levant le stylo du support de tracé vers une direction qui permet à l'utilisateur d'effectuer des variations angulaires désirées pour contrôler le déplacement du point de focus ou élément de pointage PT à l'écran d'affichage AFF. Il est à noter que l'usage qui consiste à écrire un élément graphique, puis repositionner le curseur ou élément de pointage PT à l'écran d'affichage AFF en soulevant légèrement le stylo de la feuille (ou en activant le mode pointage) par de faibles mouvement de la main qui reste reposée sur la feuille est particulièrement avantageux.

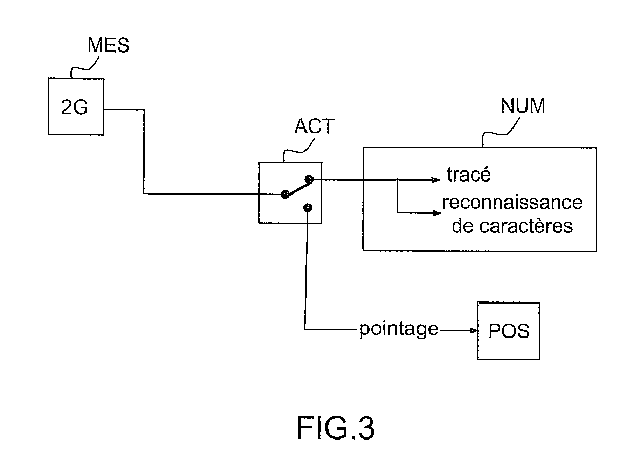

Le système comprend donc, en outre, des moyens d'activation/désactivation ACT desdits moyens de positionnement POS, dont le fonctionnement est illustré schématiquement par la figure 3.

Un tel système permet de remplacer un clavier et une souris, et fonctionne en continu pour la reconnaissance de caractères graphiques.

La présence d'un module d'apprentissage APP, optionnel, permet de pouvoir faire apprendre au système une base de données représentatives de caractères effectués par la première extrémité EXT1 du dispositif périphérique DP, et ainsi de rendre le système mieux adapté à l'utilisateur, ce qui limite les erreurs de reconnaissance de caractères.

Le dispositif périphérique DP est également muni d'un module de détermination DET, facultatif, d'un instant de début et d'un instant de fin de mouvement représentatif d'au moins un caractère effectué par ladite première extrémité EXT1. Le module de détermination DET permet de faire une reconnaissance caractère par caractère, ce qui limite les erreurs de reconnaissance. Le module de détermination DET peut par exemple être un bouton poussoir actionnable au doigt.

Le module de mesure MES peut, par exemple, comprendre un gyromètre G à deux axes de mesure et un accéléromètre A à trois axes de mesure, ou un gyromètre G à trois axes de mesure et un accéléromètre A à trois axes de mesure. Ainsi, le premier mode de réalisation permet de limiter le nombre d'axes gyrométriques sensibles, ce qui permet de limiter le coût du système mais aussi sa consommation électrique. Le second mode de réalisation permet d'accroître la robustesse du traitement, notamment pour les gestes dont les trois degrés de liberté angulaires sont représentés de manière égale (aucune ne peut être négligée).

Le mode de réalisation de la figure 2, représente le mode de réalisation comprenant l'ensemble de ces capteurs, ainsi qu'un capteur de force optionnel F à au moins deux axes de mesure, monté à ladite première extrémité EXT1.

Le module de mise en correspondance MEC des signaux mesurés avec les données représentatives de caractères de la base de données BDD sont adaptés pour utiliser, par exemple, un modèle de Markov caché, une déformation temporelle linéaire, une déformation temporelle dynamique, ou un réseau de neurones.

Ces différentes possibilités sont de grande fiabilité et bien maîtrisées.

Lorsque le système comprend un accéléromètre A, celui-ci est avantageusement disposé à proximité de ladite première extrémité EXT1, permet d'être proche du point traceur du caractère que représente la pointe. S'éloigner de la pointe, c'est s'éloigner de la trace et être perturbé potentiellement par d'autres accélérations que celles directement liées à la trace. Des moyens correctifs liés aux lois physique de composition des mouvements peuvent être mis en place s'il est impossible de placer l'accéléromètre à l'extrémité.

Dans un contexte d'affichage avec un aspect à trois dimensions, le module de numérisation NUM peut être adapté pour tenir compte d'une information représentative d'un tel aspect à trois dimensions, et l'écran d'affichage AFF adapté pour effectuer un affichage d'aspect à trois dimensions.

Le pointage est :
- soit en deux dimension ou 2D : un élément graphique appelé curseur 2D ou élément de pointage PT se déplace en abscisses X et ordonnées Y sur le repère lié à l'écran d'affichage AFF dans un univers graphique plat. (ex : document texte, présentation, tableur, dessin en deux dimensions ou 2D, outils de photomontage ou de vidéomontage). Le pointage permet de repositionner ce curseur 2D à l'endroit où l'on souhaite établir une nouvelle action (insérer un caractère, effacer un mot, reformer une ligne de tracé d'un plan, ...).
- soit en trois dimensions ou 3D : un élément graphique appelé curseur 3D ou élément de pointage PT se déplace en abscisses X, ordonnées Y, et profondeur Z dans une scène graphique en trois dimensions (ex : scène 3D d'un jeu vidéo, d'un outil de CAO 3D, ...). Le déplacement du curseur ou élément de pointage PT n'est plus celui dans le plan de l'écran d'affichage AFF mais celui de la projection sur l'objet en trois dimensions pointé. Quand il n'y a plus d'objet dans la direction pointé, le curseur est renvoyé à l'infini (en fait un plan éloigné mais toujours visible), ou, d'autres termes, le curseur est positionné en profondeur sur le premier objet qu'il rencontre. Le point de départ de cette direction peut être la position de la caméra virtuelle qui projette la scène.

Le capteur de force F peut être utilisé pour déterminer un instant de début et un instant de fin de mouvement représentatif d'au moins un caractère effectué par ladite première extrémité.

En variante, les moyens de numérisation NUM des éléments graphiques peuvent comprendre :
- des moyens de représentation en deux dimensions desdits éléments graphiques ; et
- des moyens de reconnaissance de caractères à partir de ladite représentation en deux dimensions.

Aussi, le système peut aussi fonctionner par reconstruction de tracé, par exemple, par reconnaissance optique de caractères ou OCR pour "optical character recognition" en langue anglaise.

## Revendications

1. Système de saisie d'éléments graphiques comprenant :
- un dispositif périphérique (DP) sensiblement de forme de stylo ;
- des moyens de numérisation (NUM) des éléments graphiques réalisés par une première extrémité (EXT1) du dispositif périphérique (DP) ; et
- des moyens d'affichage (AFF) adaptés pour afficher lesdits éléments
graphiques réalisés ;
**caractérisé en ce qu'**il comprend :
- des moyens de mesure (MES) de signaux représentatifs du mouvement effectué par ledit dispositif périphérique (DP), comprenant un gyromètre (G) à au moins deux axes de mesure fournissant des vitesses angulaires selon lesdits axes, liés fixement audit dispositif périphérique (DP) ;
- des moyens de positionnement (POS), sur les moyens d'affichage (AFF), d'un élément de pointage (PT), à partir desdites vitesses angulaires, et
- des moyens d'activation/désactivation (ACT) desdits moyens de positionnement (POS).

2. Système selon la revendication 1, dans lequel lesdits moyens de numérisation des éléments graphiques comprennent :
- au moins une base de données (BDD) représentatives de caractères effectués par ladite première extrémité (EXT1) ; et
- des moyens de mise en correspondance (MEC) desdits signaux mesurés avec lesdites données représentatives de caractères de ladite base de données.

3. Système selon la revendication 2, comprenant, en outre, des moyens d'apprentissage et/ou d'enregistrement (APP) de la base de données, pour créer au moins une partie de ladite base de données.

4. Système selon l'une des revendications 1 à 3, dans lequel lesdits moyens de mesure (MES) comprennent un accéléromètre à au moins deux axes de mesure (A).

5. Système selon la revendication 4, dans lequel ledit accéléromètre (A) est disposé à proximité de ladite première extrémité (EXT1 ).

6. Système selon la revendication 5, dans lequel lesdits moyens de mesure comprennent des moyens de correction (CORR) adaptés pour remplacer les mesures de l'accéléromètre (A) par des mesures corrigées par association par loi de composition du mouvement des mesures dudit accéléromètre (A) aux mesures dudit gyromètre (G) pour tenir compte de l'éloignement dudit accéléromètre de ladite première extrémité (EXT1).

7. Système selon l'une des revendications précédentes, dans lequel lesdits moyens de mesure (MES) comprennent un magnétomètre à au moins deux axes de mesure (M).

8. Système selon l'une des revendications précédentes, comprenant, en outre, des moyens de détermination (DET) d'un instant de début et d'un instant de fin de mouvement représentatif d'au moins un caractère effectué par ladite première extrémité (EXT1).

9. Système selon l'une des revendications précédentes, dans lequel lesdits moyens de mesure (MES) comprennent un capteur de force (F) à au moins deux axes de mesure, monté à ladite première extrémité (EXT1).

10. Système selon l'une des revendications précédentes, dans lequel lesdits moyens de numérisation (NUM) sont adaptés pour tenir compte d'une information représentative d'un aspect à trois dimensions, et lesdits moyens d'affichage (AFF) sont adaptés pour effectuer un affichage d'aspect à trois dimensions.

11. Système selon les revendication 9 ou 10 selon la revendication 9, dans lequel ledit capteur de force (F) est adapté pour déterminer un instant de début et d'un instant de fin de mouvement représentatif d'au moins un caractère effectué par ladite première extrémité (EXT1).

12. Système selon l'une des revendications précédentes, dans lequel lesdits moyens de mise en correspondance (MEC) desdits signaux mesurés avec lesdites données représentatives de caractères de la base de données (BDD) sont adaptés pour utiliser un modèle de Markov caché, une déformation temporelle linéaire, une déformation temporelle dynamique, ou un réseau de neurones.

13. Système selon la revendication 1, dans lequel lesdits moyens de numérisation (NUM) des éléments graphiques comprennent :
- des moyens de représentation en deux dimensions desdits éléments graphiques ; et
- des moyens de reconnaissance de caractères à partir de ladite représentation en deux dimensions.

14. Système selon la revendication 13, dans lequel lesdits moyens de reconnaissance de caractères comprennent des moyens de reconnaissance optique de caractères.
